(19) Europäisches Patentamt

European Patent Office

Office européen des brevets

(11) Publication number: **0 347 242**
A2

## (12) EUROPEAN PATENT APPLICATION

(21) Application number: **89306118.4**

(22) Date of filing: **16.06.89**

(51) Int. Cl.⁴: **B 60 K 31/00**

(30) Priority: **17.06.88 US 207782**

(43) Date of publication of application:
**20.12.89 Bulletin 89/51**

(84) Designated Contracting States:
**AT BE CH DE ES FR GB GR IT LI LU NL SE**

(71) Applicant: **Lin, Yng-Lang**
**P.O. Box 84-518**
**Taipei (TW)**

(72) Inventor: **Lin, Yng-Lang**
**P.O. Box 84-518**
**Taipei (TW)**

(74) Representative: **Thomson, Roger Bruce et al**
**POLLAK MERCER & TENCH Eastcheap House Central Approach**
**Letchworth Hertfordshire SG6 3DS (GB)**

(54) Collison avoidance system.

(57) The features of this proposed invention contain the following item:

1. To require the driver to pay attention to driving safety all the time.

2. When the driver is attentive, though the induction apparatus detects any objects, this proposed invention assists the driver just by means of alarming and downing speed; that is, as long as the driver is being attentive or is able to step the brake pedal or to step off from the accelerator pedal, the car won't brake automatically.

3. When there are dangerous situations that the driver is not attentive, or that the driver won't step the brake pedal or step off from the accelerator while this car is too close to the front car or any objects come within a close distance suddenly, this proposed invention will brake automatically because of detecting automatically.

4. When the driver is not attentive or the induction apparatus detects any objects, this proposed invention will forthwith give warnings backwards to the following driver to make him/her on the alert.

5. When this car brakes automatically or the driver steps the brake pedal or steps off from the accelerator pedal, this proposed invention will transmit some certain frequency to the following car to make it receive; if the following driver doesn't also step the brake pedal or step off from the accelerator pedal, thereupon the following car brakes automatically.

6. There is a forewarning device to forewarn anytime the following driver that "this car will brake automatically" to make him/her on the alert.

FIG .1

## Description

### COLLISION AVOIDANCE SYSTEM

This proposed invention was completed with the design of circuit. (The on or off mentioned as below refers to the electricity is connected or disconnected.)

Though there was ever an induction alarm "containing an induction set on the front part of a car and being able to alarm while detecting any objects," the defects of such an induction alarm are that it can only avoid bumping objects in front of the car but can't avoid being bumped of the hind part of the car, and that it can only detect objects right in front of the car but can't detect dangers from both sides of the road in front of the car or any other dangerous situations; so, while dangers from both sides of the road in front of the car or any other dangerous situations happening they are not avoidable so as to cause bumping or to cause other fatal accidents. (In fact, to avoid bumping resulted from dangers on both sides of the road in front of the car or any other dangerous situations has to rely on the condition that the driver pays attention to driving safety all the time so as to take precautions or to respond promptly. This is the most effective method and can't be denied to anyone.) Though the induction brake that "uses the above induction apparatus to actuate the brake machine to brake automatically" has also been invented, its defect is also that it can only avoid bumping objects in front of the car but can't avoid being bumped of the hind part of the car. Moreover, because the said induction brake still has to rely on the said induction apparatus to detect, it still can't detect objects on both sides of the road in front of the car or any other dangerous situations; this defect is still similar to the said induction alarm. Furthermore, the defects of the said induction brake still include "that, at a far distance, the car will brake automatically as long as any objects are detected no matter whether necessary or not. "If objects coming suddenly within a close distance of induction to cause dangers, it should be necessary to make the car brake automatically; if the car is also made to brake automatically when objects are at a far distance of induction and the driver is being attentive, this is sometimes not suitable on roads where the traffic is getting disorderly. The purpose of this proposed invention primarily is to solve all the above problems, the defects; so this invention of the bump avoid system, while the said induction apparatus detects any objects or while the driver is not being attentive, forthwith will gives warnings backwards, while the car braking automatically or the driver stepping the brake pedal, it can also make the following car brake automatically to avoid being bumped of the hind part of this car. Moreover, the said bump avoid system will speak to the driver that "You have to pay attention to driving safety all the time, and show me by pressing a button periodically that you are being attentive". After the speaking, the driver is required to press a switch once to show the said bump avoid system that he/she is being attentive, and then presses once periodically; then the said bump avoid system will off continuously the brake circuit of the said induction brake to make the car, while the said bump avoid system detects any objects at a far distance, not brake automatically. After the speaking of the said bump avoid system, if the driver doesn't press the said switch once and then again and again periodically, it indicates that he/she has failed to be attentive; the said bump avoid system not only will give warnings to the driver first, but also will on the brake circuit of the said induction brake so as to make the car brake automatically while it detects any objects at a far distance. Because the said bump avoid system not only will remind the driver that he/she has to pay attention to driving safety all the time, but also, if the driver doesn't press the said switch once periodically to show that he/she is being attentive all the time, will give warnings and make the said induction brake brake automatically as long as any objects are detected no matter whether necessary or not; these above effects of the said bump avoid system will make the driver " wake" to the fact that he/she has no alternative but concentrating on driving safety, thereupon the driver will pay attention to dangers right ahead and on both sides of the road in front of the car and any other dangerous situations so as to take precautions or to respond promptly to avoid bumping. The said bump avoid system not only solves the problem of the two previous inventions mentioned above, that is the defect of being not able to detect objects on bth sides of the road in front of the car and any other dangerous situations, but also won't make the said induction brake automatically as long as any objects are detected at a far distance no matter whether necessary or not.

The said bump avoid system contains not only a primary function of making the driver "wake" to the necessity of paying attention to driving safety all the time, but also an assistant function of avoiding bumping automatically; this assistant function is that the said bump avoid system not only can distinguish the far or close distance of induction, but also can distinguish the respondences either by alarming and downing speed while objects are at a far distance or by braking once automatically while objects come within a close distance suddenly and the driver won't step off from the accelerator pedal or to step the brake pedal. The said two kinds of distinguishments are rather good features of this proposed invention. The reason is that, though the said bump avoid system can make the driver "wake" to the necessity of paying attention to driving safety all the time so as to solve the above problems, that is the defects of "being unable to detect" and "braking automatically no matter whether necessary or not," there is not anything capable of serving all purposes all over the world; so, once the sight of driving is not clear or it is sometimes still possible for the driver not to pay attention to driving safety, the said bump avoid system still contains an assistant function of alarming and downing speed while objects are at a far distance, and, if such alarming or downing speed is still not in time, the said bump avoid system at least still will make the car brake once automatically while objects coming within a close distance so as to reduce the impulsive force largely to at least make the damage slighter or even more avoid bumping for the sake of cushion resulted from braking once automatically.

In short, the previous two inventions mentioned above both use the induction apparatus to detect, so they can detect only objects right in front of the car; furthermore, the effect of bump-avoiding by means of alarming only is limited; if add the function of braking automatically, the car will brake automatically as long as any objects are detected at a far distance no matter whether necessary or not, so that the function of braking automatically sometimes is not suitable. In fact, the most important thing still is to realize that the manner, "to pay attention to driving safety all the time," is the most effective method of bump-avoiding, which is generally recognized, so that this proposed invention with a primary function of "requiring the driver to pay attention to driving safety all the time" is absolutely correct; also this invention contains an assistant function of alarming and speed-downing while objects are at a far distance and still being able to brake once automatically while the objects come within a close distance; moreover, it is also able to avoid being bumped of the hind part of the car, and so on. Therefore this bump avoid system may be said to be a very considerate and very useful invention.

The invention with a primary function of requiring the driver pay attention to driving safety as well as subsidiary function of avoiding bump automatically, including the bump avoiding function of the hind part of a car.

An embodiment of this invention is described by way of examples, with reference to the drawings in which:

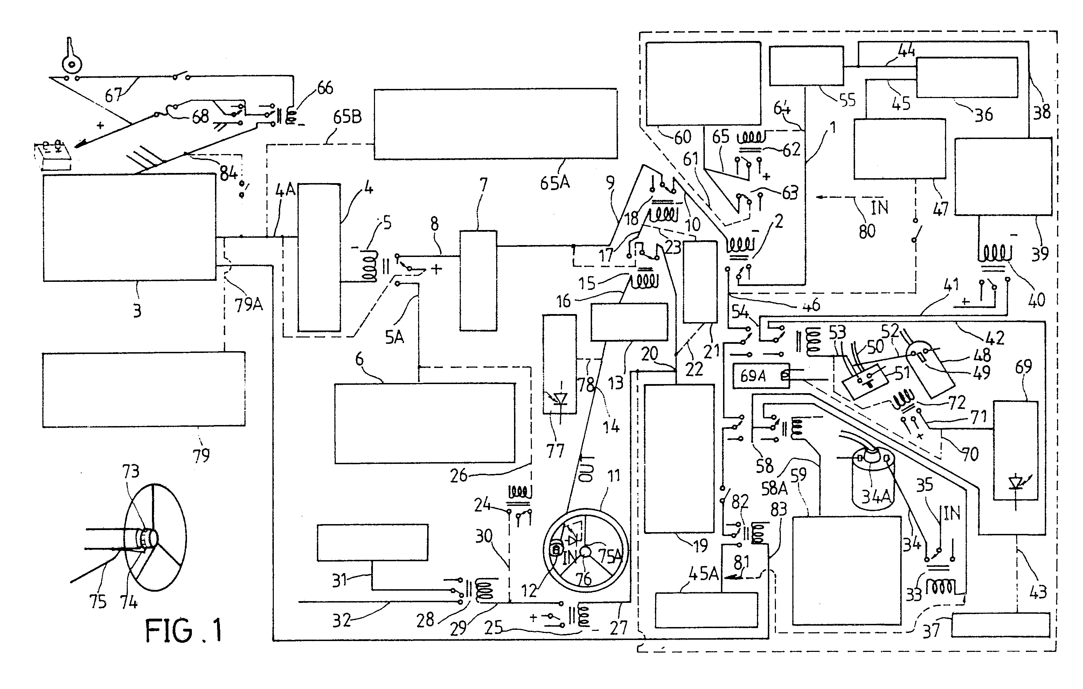

    Fig. No. 1 Brake Circuit.

    2.5.15.18.24.25.28.33.40.54.58.62.72. and 82.etc. Relay. (or Transistor or an object with on-or-off function.)

    3. Induction Distance Regulator, which will automatically regulate the induction distance in accordance with the speed of the car.

    4. Delay Time Circuit or Time Circuit; in case of delay time circuit; output won't be produced immediately after electricity is supplied; thus, a certain duration of electricity supply is needed for output. Moreover, output will last only for a period of time.

    6. Speaking Device, which can speak sentences bearing the meaning that reminds the drivers of being attentive to driving as well as that requests drivers press a button key as an expression of being alert.

    7. Delay Time Circuit, which, even though the electricity is supplied, won't produced output unless a period of time has passed by.

    11.Steering Wheel.

    12.Button Switch (or an object with on-or-off function).

    13.Time Circuit, which , while is supplied with electricity, outputs only for a limited period, then it will discontinue. To restart the output requires supply electricity again.

    19.Speaking Device, which can speak sentences bearing the meaning that asks the driver whether he/she is paying attention, as well as that questions the driver for no response.

    21.Time Circuit, which, while is supplied with electricity, outputs only for a limited period, then it will discontinue. To restart the output, the said electricity should be turned off and then be turned on again.

    31.32 The electricity necessary for the music in the car or the radio.

    Fig.No. 34A Ignition Coil.

    34.35.Electricity of Ignition Coil (or other electricity source may starts car engine.)

    36.Induction Apparatus.

    37.Alarm Signal.

    39.Delay Time Circuit or Time Circuit.

    44.Output, which has strong capability of induction (long distance).

    45.Output, which has weak capability of induction (short distance).

    45A. Brake Machine.

    47. Delay Time Circuit or Time Circuit.

    48. Accelerator Pedal.

    49. Button Switch. ( or an object with on-or-off function).

    50. Brake Pedal.

    51. Button switch. ( or an object with on-or-off function).

    55. Timer Switch.

    59. Switch or time circuit are actuated by operating indicator light.

    60. Alert Device, reminding the following driver of being attentive.

    65A.Forewarning Device, which may warm anytime in advance that the car will automatically brake.

    67. The electricity whose on-or-off status is controlled by the key.

    69. Transmitter that functions in a backward manner.

    69A.Brake Light.

    70A.Electricity of Brake Light.

    77. Infrared Receiver.

    79. Screen, which shows the words of the above speaking device 6.

The said bump avoid system contains all the following techniques:

Make the on-or-off of the brake circuit 1 (that is , the circuit that can make the brake machine brake) of the said induction brake be controlled by relay (or transistor)2. The said relay (or transistor)2 makes the brake circuit on in such a way: Induction distance regulator 3 (that is one that was already invented previously and is able to regulate automatically the induction distance of an induction apparatus according to the speed of a car; zero output while the car stops, and the faster the speed, the stronger the degree of induction that is output to the induction apparatus,) supplies electricity 4A for delay time circuit4 to make it function; the said delay time circuit 4,makes relay (or transistor)5 function;

the said relay (or transistor) 5 first supplied electricity 5A for speaking device 6 to make it speak "you have to pay attention to driving safety all the time and show me by pressing a button periodically that you are being attentive." Then, off the electricity necessary for the said speaking device and instead supply delay circuit 7 with necessary electricity 8 to make it function; the said delay circuit 7, after making a delay, supplies relay (or transistor) 2 with necessary electricities 9 and 10 to make it function to on the said brake circuit 1. While the car stops, the said delay time circuit 4 won't function because of zero output of the said induction distance regulator 3, so the said relay 2 won't make the said brake circuit on; after the car starts moving, thereupon the said speaking device 6 speaks to the driver and, for a while after its speaking, the driver is required to press once a button switch 12 (that is the said switch)set on the inside circumference of steering wheel 11 to show the said bump avoid system that he/she is being attentive; if not, the said relay 2 will on the said brake circuit. Because, while the driver pressing the said button switch, time circuit 13 will be supplied with necessary electricity 14 to function; the said time circuit 13 will supply relay (or transistor ) 15 with necessary electricity 16 to make it function; and the said relay 15, while functioning, supplies electricity 17 for relay (or transistor) 18 to make it function to off the electricities 9 and 10 necessary for the said relay 2 to make the said relay 2 not function so as to off the said brake circuit. The driver has to press once the said button switch periodically and, only in such a condition, the said relay 2 will continuously off the said brake circuit, because the said time circuit 13 supplies the said relay 15 with necessary electricity only for a period. According to the result of this petitioner's experiments, it is more suitable to set the said period to be about 5 seconds (the said period may be regulated to be longer or shorter); the driver presses once about every 5 seconds; if the driver doesn't press once after the said period the said relay 15, because the electricity 16 necessary for it is made off, will instead supply another speaking device 19 with necessary electricity 20 to make it function to ask the driver that "Are you not being attentive ? Why did you not press the button to show me? " The asking will repeat and won't stop only until the driver presses once the button to express his/her being attentive, so it is much full of the effect of reminding. In order not to make the driver nervous for the sake of handling the answering, though the driver doesn't press once after the said period, what will happen consequently first is only the asking of the said speaking device but not the on of the said brake circuit; because there is a time circuit 21 that is supplied with necessary electricity 22 at the same time as the said speaking device 19 is supplied with electricity, and the said time circuit 21 will temporarily supply the said relay 18 with necessary electricity 23 to make the relay 18 temporarily off the electricity necessary for the said relay 2 to make the said reply 2 temporarily off the said brake circuit so as to make the driver have time to answer and so be not nervous. According to the result of this petitioner's experiments, it is more suitable to set the said temporality to be about 10 seconds, but it can be regulated to be longer or shorter. If the driver still doesn't press once to answer after about 10 seconds, it exactly indicates that he/she is not being attentive; meanwhile the said time circuit 21 has already stopped functioning, and thereupon the said brake circuit is made on to be ready to brake automatically at a far distance as long as any objects are detected. In order to avoid the driver's not hearing of the speaking of the said speaking device 6 or 19 because of listening to music in the car, the said music in the car will be made off while the said speaking device 6 or 19 is speaking. The off of the said music in the car is made by means of supplying relays (or transistors) 24 and 25 with necessary electricities 26 and 27 at the same time while supplying the said two speaking devices with necessary electricity; the said relays 24 and 25 both supply a relay (or transistor)28 with necessary electricities 29 and 30; the said relay (or transistor)28 ia used to off the electricities 31 and 32 necessary for the said music in the car; if the driver is unwilling to have the music done as such, he/she may make the said relay (or transistor) 28 not function. The said speed-downing is made by means of using a relay (or transistor)33 to off the electricities 34 and 35 necessary for the ignition coil 34A of the car, (or the electricity concerned with the starting of engine), to make the ignition coil stop igniting and stop igniting intermittently and timingly, so that it not only will down speed promptly but also is much full of effect of reminding; the said prompt speed-downing, while objects are detected at a far distance, produces much effect of bump-avoiding. The said intermittent stop of ignition is made by means of adding a delay time circuit 39 between the circuit 38 that is supplied for alarm signal 37 by induction apparatus 36; while functioning, the said relay 40 supplies the said relay 33 with necessary electricities 41 and 42 to make it function intermittently timingly. Because the electricity 43 necessary for the said alarm signal is supplied by the said relay 40 instead, the said alarm signal will also alarm intermittently and timingly so that it is not only much more effective in reminding but also less noisy. If the driver is not afraid of noise, the said delay time circuit 39 may also be replaced with time circuit only so as to down speed and alarm intermittently continuously. The said braking once automatically at a close distance is designed as such: Divide the induction circuit of the said induction apparatus into the strong and the weak: the strong 44, while objects are at a far distance, forthwith functions and the weak 45 function only while objects come within a close distance (it is about a half of the induction distance of the strong and can be regulated to be shorter or longer); the brake circuit (that is 1) that the strong is to make the said brake machine 45A brake has to be made on by the said relay 2, and the circuit 46 that the weak is to make the brake machine brake is directly connected to the brake machine--so, while objects come within the said close distance (that is a dangerous distance) or objects come within (rush in) the said close distance suddenly, the car will brake once automatically if the driver will not step off from the accelerator pedal or step the brake pedal. The said braking once automatically is made by means of using a time circuit 47 to supply the said brake machine with necessary electricity; the electricity necessary for the said time circuit 47 is supplied by the said weak 45.

Since the features of this proposed invention are to regard the function of requiring the driver pay attention to driving safety all the time as a primary effect, the said bump avoid system can also distinguish that it indicates that the driver is being attentive when he/she steps off from the accelerator pedal and steps the brake pedal so as to neither brake automatically and down speed nor alarm no matter whether objects are at a far or close distance, and only as such won't produce bother to the driver. The function of the distinguishment mentioned above is derived in such a way:

Set the button switch 49 (it is off while pressed) on the accelerator pedal 48; set the button switch 51 (it is on while pressed) on the brake pedal 50, too; the said button switch 49, while the driver stepping off from he accelerator pedal, and the said button switch 51, while the driver stepping the brake pedal, will supply electricities 52 and 53 for the relay (or transistor) 54 to make it function to make the electricities necessary for the said brake machine and the said relay 33 off. When the electricity necessary for the relay 33 is made off, the electricity necessary for the said alarm signal will be made off, too, because the electricity necessary for the said alarm signal is connected to the electricity coming from the electricity necessary for the said relay 33.

The said bump avoid system is still attached with a relief circuit "which, while the driver overtaking a car, can off automatically the electricity necessary for the said brake machine and the electricity necessary for the said relay 33. " In case the driver, while overtaking, wants to use only the alarm and the said speaking device as the bump avoid device in order to make the car not brake automatically, he/she may use the said relief circuit. The said relief circuit functions in such a way: while the driver operating the indicator lights, let the operation bar of the indicator lights actuate a switch to supply the electricity 58A for the relay ( or transistor ) 58 to off the electricities necessary for the said brake machine and the said relay 33. So the car will neither brake automatically nor down speed. The electricity necessary for the said relay (or transistor ) 58 can also be supplied by the time circuit 59; the electricity necessary for the time circuit 59 is then supplied by the electricity which is supplied for the indicator lights to make them function. Because the electricity supplied for the indicator lights to make them function is intermittent, the electricity necessary for the said relays 58 must be supplied continuously by the time circuit 59.

In order to make the following driver on the alert when the said speaking device 19 is supplied with electricity; this electricity will also supply the alert device 60 with necessary electricity 61 to make it function to remind the following driver of being attentive. The said alert device 60 reminds with a twinkling light or other more special warning device or by making the brake light twinkling. No matter which method we adopt to remind the following driver, all the alert devices are unified.) Moreover, when detecting objects, the said induction apparatus will also make the said alert device 60 function; but meanwhile the said speaking device 19 won't misfunction; because, although the said alert device is supplied with electricity at the same time as the said speaking device 19 is supplied with electricity, this electricity is not supplied directly but through the on of the first group of joint points 63 of the relay (or transistor) 62; when the said induction apparatus detects objects and then actuates the time switch 55, this time switch 55 will supply the said relay 62 (transistor) with electricity 64 to make it function to make the said first group of joint points off; meanwhile, the second group of joint points is on and supplies electricity 65 for the said alert device. In addition, the said electricity 4A also supplies a forewarning device 65A with necessary electricity 65B to make it function; this function forewarns anytime the following driver that " this car will brake automatically" and make him/her on the alert.

The said bump avoid system still contains a power-control device 66 which ons or offs the power of the said bump avoid system and also ons or offs the electricities necessary for the said induction distance regulator, the said induction apparatus, the said alert device, and so on. The said power-control device uses "electricity 67 controlled by the car key" to make the relay function to on the power; when the driver wants to drive the car and starts the car by turning the car key, the said 67 then supplies this said relay with electricity necessary for its funciton to make it on; when the driver wants to stop the car by turning the car key back, the said 67 stops supplying this said relay with electricity necessary for function to make it off. The said power-control device contains fuse 68.

In order to make the following car also brake automatically while this car braking automatically, the said bump avoid system still contains " a circuit transmitting backwards." The way is to set the backward transmitter 69 on a suitable place of the hind part of this car. The said transmitter 69 is supplied, in one way, with electricity coming from electricity 70 that makes the brake light function and, in the other way, with electricity 71 (The on-or - off of this electricity is controlled by the relay 72 so that the electricity 70 won't be connected with electricities 52 and 53. Thus the said relay 54 won't function through the brake light functions while braking automatically.) coming form electricities 52 and 53 that make the said relay 54 function. Therefore, this backward transmitter 69 can not only transmit some certain frequency to the induction apparatus of the following car to make it receive to make the following car brake automatically when this car brakes (no matter stepping the brake pedal or braking automatically), but also transmit backwards to make precedently the following car brake automatically when the driver of this car steps off from the accelerator pedal. The said suitable place means the place where the said transmitter 69 can make the induction apparatus (receiver) of the following care receive the frequency transmitted by it.

Except the said alert device, the said forewarning device, and the said transmitter of the said bump avoid system, all the other component parts and circuits that can be concentratively assemblied on a circuit sheet (P. C. B.) are done as such. Also the said circuit sheet is set inside a box, and only the electric wires required to be stretched outwards are done as such.

The said button switch 12 supplies the said time circuit 13 with electricity. In order to avoid the electric wire through which the said button switch 12 outputs electricity to wind left and right according to the turning of the steering wheel, there are two designs:

1. Encase a ring 73 capable of electricity-conducting on the outside circumference of the center of the steering wheel of the car either possessed now or in the future. On the fixed section that is joined to the center of the steering wheel, set an electricity-conducting piece 74 of shape touching the said ring 73. First, the output of electricity of the said button switch connects to the said ring, and then the said electricity-conducting piece 74, with the electric wire 75 connected to it, supplies necessary electricity for the said time circuit 13.

2. If the center of the steering wheel of the car possessed now can't be set with the said ring 73, the said button switch is then designed to supply an infrared transmitter 75A with necessary electricity. (This electricity is produced by a small solar-energy-recharging or normal battery set on the center 76 of the steering wheel.) Besides, at a suitable place where "it is easy to receive the infrared ray transmitted by the said infrared transmitter 75A," set the infrared receiver 77 which, while functioning, supplies the said time circuit with necessary electricity 78. The on-or-off of the power necessary for this infrared receiver is also controlled by the said power-control device 66. The inside circumference of the steering wheel of the car designed in the future may be placed with button switches which are arranged into a ring, so that the button switches can be pressed anywhere no matter how the steering wheel turns. If the driver hopes that the said speaking device 6 speaks periodically and is not afraid of noise, the said delay time circuit 4 thus can be replaced with a time circuit in order to make the said speaking device 6 speak periodically. If the driver wants to touch with thumb the said button switch 12 all the time to show the said bump avoid system that he/she is being attentive, the said button switch 12 can be changed to control the electricity necessary for time circuit to make it function; this time circuit, while functioning, makes the said relay 2 function. The said button switch is also required to be changed to be off while touching and on while not touching.( while on, it also supplies the said speaking device 19 with necessary electricity.) If the steering wheel can not be set with the said ring 73, the electricity necessary for the said time circuit and the said speaking device 19 is thus controlled by the said infrared receiver. In order to be able not to make noise to the driver and also to be able to make it more possible for the driver to pay attention to driving safety all the time and to show his/her being attentive to the bump avoid system, the words spoken by the said speaking device 6 are also indicated especially in another way of being periodically showed on a screen 79 (that will indicate words periodically) to further remind the driver. The electricity 79A necessary for the said screen is also supplied by the said electricity 4A. The said bump avoid system still uses the induction distance regulator invented before. The reason is that the said induction distance regulator functions while the car is moving or stops functioning while the car stops. Such a way of function is equal to the function of the automatic on-or-off so it is able to make the said bump avoid system on of off, automatically according to moving or stopping of the car.

All the following explanations are also this petitioner's inventions:

1. Similarly for the purpose of requiring the driver to pay attention to dring safety all the time, yet not use the said induction apparatus for supply of electricity. In another way, one can make electricity 80 on by the said relay(or transistor) 2 to supply the said brake machine or the said relay 33 with electricities necessary for their functions. If the driver doesn't press the said button switch 12 periodically, the said relay 2 will make the said electricity 80 on. Without the said induction apparatus, only to on the electricity 80, is able to make the said brake machine brake or to make the said relay 33 function so as to down speed.

2. Similarly for the purpose of requiring the driver to pay attention to driving safety all the time, yet change the said brake circuit 1 to make it supply the said relay(or transistor) 33 with electricity 81 necessary for its function. If the driver doesn't press the button switch 12 periodically, the car will thus down speed.

3. To change the said relay(or transistor) 18 to make it on or off "the electricities(e.g. 8) concerned with the function of the said relay(or transistor) 2" is also able to on or off the electricity necessary for the said relay 2.

4. Hoping to brake or down speed automatically only at some certain speed, therefore use the said induction distance regulator to supply the relay(or transistor) 82 with electricity 83 necessary for its function to make it function. This function thus ons the electricities necessary for the said brake machine or the said relay 33.

5. Set the said button switch 12 on the instrument board or other suitable place where the driver is able to press very conveniently.

6. The said button switch 49 and 51 are inlaid in the concave of a sheet, only the button protruding upward a little. The said sheet is then set on the accelerator pedal or the brake pedal not to influence the driver on his/her stepping the accelerator pedal or the brake pedal. On the said sheet is also a rubber with the function of slide-proof.

7. When the front driver steps off from the accelerator pedal or the front car brakes automatically(or the driver steps the brake pedal) so as to make the said transmitter 69 function, if the driver of this car wants to be made aware of it only by downing speed or warning instead of braking automatically, this car can thus be set more with a receiver "receiving specially the frequency of the said transmitter 69. "This receiver specially actuates such speed-downing or warning.

8. Substitute other objects with on-or-off function for all the relays or transistors mentioned above.

9. The electricity 4A necessary for the function of the said delay time circuit or time circuit 4, if not supplied by the said induction distance regulator 3, then is supplied by "the electricity produced by an object that reacts to the speed of the car," or by "the electricity controlled by the stopping or moving of the car," or by "the said power-control device". If supplied by the said power-control device(please refer to 84), the electricity necessary for the said bump avoid system may on or off automatically by turning on or off the said car key because the said 4A also supplies the said bump avoid system with necessary electricity.

That the most effective method of bump-avoiding is that the driver has to pay attention to driving safety all the time is generally recognized, so it can't be denied by any reason and can't be denied by any one. Though the driver formerly does have an intention of paying attention to driving safety all the time, he/she will be unable to do as such and then often fails to pay attention to driving safety(because human beings often have the problem of being absent-minded) so as to bump; if there is an equipment of "requiring the driver to concentrate and to pay attention to driving safety all the time" in the car, with this equipment and the intention that formerly does pay attention to driving safety all the time, the driver of course will pay attention to driving safety all the time---this is a fact, a result of experiments, and can't be denied by any one. The effects of this proposed invention of the bump avoid system does contain the function of the said equipment; after the car starts moving, it will not only frequently remind the driver of paying attention to driving safety all the time, but also require the driver to answer periodically that he/she is being attentive; moreover, in case the driver doesn't answer after being reminded, it will not only ask the driver but also, if the driver still doesn't answer after being asked, make the car brake automatically as long as any objects are detected at a far distance, no matter whether necessary or not; combining all the above effects so as to make the driver possess "the awareness of intending to pay attention to driving safety" to pay attention to driving safety concentratedly all the time thus becomes the most effective method of bump-avoiding. So the driver not only is able to pay attention to the right front of the car, but also is able to pay attention to dangers on both sides of the road right in front of the car and any other dangerous situations; this effect solves the problem, the defect of being unable to detect objects on both sides of the road right in front of the car and any other dangerous situations,of the induction alarm and induction brake that were invented previously. Moreover, because the said awakeness makes the driver pay attention to driving safety all the time, the driver will naturally step the brake pedal while necessary; so it is unnecessary to make the said induction brake automatically no matter whether necessary or not. The said awakeness is also a result of experiments, that is the natural respondence of mentality of human beings.

The effects of this proposed invention of the bump avoid system sill contain "alarming and downing speed as long as objects are detected at a far distance no matter whether the driver is being attentive or not, "and braking once automatically in case the driver will not step off from the accelerator pedalor to step the brake pedal while any objects come within a close distance suddenly. Because of containing the said alarming and downing speed, this invention of the bump avoid system, once the sight of driving is not clear or the driver sometimes still fails to pay attention to driving safety, can remind the driver and make the car a little less slow and so, without the braking automatically, also can avoid bumping. Because of the said braking once automatically, this invention of the bump avoid system, if the said alarming or downing speed is still not in time, at least can reduce the impulsive force largely to make damage slighter and even more can avoid bumping because of cushioning resulted from braking once automatically.

The effects of this proposed invention of the bump avoid system still contain one, giving warnings backwards to the following car to make the following driver on the alert while the driver of this car doesn't press once and this indicates that he/she has failed to be attentive or while the said induction apparatus detects any objects. Moreover, while this car braking automatically or the driver of this car stepping the brake pedal of stepping off from the accelerator pedal, this invention of the bump avoid system will transmit some certain frequency backwards to the following car to make its induction apparatus receive so as to brake automatically in order to avoid being bumped of this car. In addition, there is a forewarning device able to foerwarn the following driver anytime that "this car will brake automatically" to make him/her pay attention in advance so as to avoid being bumped of the hind part of this car.

**Claims**

1. A bump avoid system with a primary function of requiring the driver to pay attention as well as an assistant function of automatically bump-avoiding---braking automatically only while the driver is not being attentive, containing all or any of the following designs:

(a) The circuit, with which the said induction brake makes the brake machine brake, is made on or off by relay (or transistor) 2. This on is that the said induction distance regulator 3 supplies delay time circuit or time circuit 4 with electricity necessary for its function to make it function; this function supplies relay (or transistor) 5 with electricity 5B necessary for its function to make it function for a period of time. This period of time is the time during which the relay 5 supplies speaking device 6 (or alarm device) with electricity necessary for its function to make it function; while the supply of the said electricity 5B is cut, the said relay (or transistor) instead supplies delay circuit 7 with electricity necessary for its function; after using this delay circuit 7 to make a delay, supply the said relay (or transistor) 2 with electricity necessary for its function to make it function to on the circuit with which the said induction brake makes brake machine brake. When this on is to be make off, the way is that the electricity (or other electricities concerned with making the said relay or transistor 2 function) necessary for the said relay(or transistor) 2 to function is made off by relay (or transistor) 18; this off is because the electricity, necessary for the said relay(transistor)18 to function, is made on by relay(or transistor) 15. This on is because the electricity necessary for the said relay (or transistor) 15 to function is supplied by time circuit 13, this supply is because the electricity necessary for the said time circuit 13 to function is supplied by operating button switch (or other object with on-or-off function).

(b) Or substitute other object with on-or-off function(to be shortly called the said object in the following) for all the above relays or transistors.

(c) While speaking, the said speaking device 6 is speaking in words "bearing meanings of reminding the driver of being attentive to driving" or is also speaking in words "bearing meanings of requiring the driver to press a button to show that he/she is being attentive" to help the driver pay attention to driving.

(d) The said relay(or transistor or the said object) 15, while offing the electricity necessary for the said relay(or transistor or the said object) 18 to function, supplies instead the speaking device (or alarm device) 19 with electricity necessary for its function to make it function.

(e) While speaking, the said speaking device 19 is speaking in words "bearing meanings of asking the driver whether he/she is being attentive or not" or is also speaking in words "bearing meanings of asking the driver of the reason why he/she didn't answer" to make the driver pay attention and answer.

(f) If the driver doesn't press(or touch) the button switch(or an object with on-or-off function) once periodically, the circuit with which the said induction brake makes the brake machine brake is thus made on by the said relay(or transistor or the said object) 2 so that the car, while any objects are detected by the said induction apparatus, will brake automatically.

2. A bump avoid system as mentioned in claim 1., which is able to alarm or to down speed automatically to assist the driver as long as the said induction apparatus detects any objects, no matter whether the driver is being attentive or not. Once the sight of driving is not clear or the driver still sometimes fails to pay attention, the car car can avoid bumping. It is completed by using the following designs:

(a) Keep the previous induction alarm or also keep the said speed-downing (that is, off intermittently the electricity necessary for the ignition coil of the car or the electricity concerned with the starting of engine).

(b) The said induction apparatus first supplies delay time circuit with electricity necessary for its function to make it function; this function makes the relay(or an object with on-or-off function) function intermittently and, after a delay, function intermittently again; this function makes the said induction alarm or the said speed-downing function intermittently and, after a delay, function intermittently again.

3. A bump avoid system as mentioned in claim 1, which will remind the driver of being attentive in case the driver is unable to step off from the accelerator pedal or to step the brake pedal while any objects coming within al close distance suddenly. The concerned designs include:

(a) Divide the degrees of induction of the said induction apparatus into the strong and the weak(that is far-distance induction and close-distance induction), and the induction distance of the strong is much farer than the weak.

(b) The circuit that the strong intends to make the said brake machine brake is controlled by the said relay(or transistor or the said object) 2; but the circuit that the weak does as such does not controlled by the said relay 2--as long as any objects are detected at a close distance, this weak forthwith actuates time circuit, and this function of time circuit thereupon makes the said brake machine brake once.

(c) Or the weak only actuates "the warning device which is designed specially to distinguish that objects are at a short distance", but doesn't make the said brake machine brake once.

4. A control system that requires the driver to be attentive and, if not, makes the brake machine brake. It contains the following designs:

(a) Use the designs of (a), (c), (d), (e) that are stated in claim 1; or also containing (b).

(b) Not use the circuit with which the said induction apparatus makes the said brake machine brake, but use another electricity 80 to be make on by the said relay(or transistor or the said object) 2 to supply the said brake machine with electricity necessary for its function to make it brake.

(c) If the driver doesn't press (or touch) the said button switch (or an object with on-or-off function) once periodically, the said relay ( or transistor or the said object) 2 thereupon ons the said electricity 80 so that, without the said induction apparatus, it also can make the said brake machine brake.

5. A control system that requires the driver to be attentive and if not, will down speed. It contains the following designs:

(a) Use the designs of (a), (c), (d), (e), that are stated in claim 1; or also containing (b).

(b) Not use the said induction apparatus to supply electricity, and instead use the said electricity 80 to be made on by the said relay (or transistor or the said object) 2 to supply time circuit with electricity necessary for its function to make it funciton; this function makes the said relay (or an object with on-or-off function) 33 funciton timingly to off intermittently the electricity necessary for the ignition coil of the car or the electricity concerned with the starting of engine.

(c) If the driver doesn't press (or touch) the said button switch (or an object with on-or-off function) once periodically, the said relay ( or transistor or the said object ) 2 thereupon ons the said electricity 80 to make the car stop igniting intermittently so as to down speed.

6. A bump avoid system with a primary function of requiring the driver to pay attention as well as an assistant function of automatically bump-avoiding, while the driver is not attentive, is able to down speed automatically by using all the designs stated in claim 1; except changing the said circuit that makes the brake machine brake to make it supply electricity necessary for relay( or an abject with on-or-off function) 33 to function so that it can make the car, while the driver doesn't press the said button switch periodically, down speed automatically to avoid bumping.

7. In order to avoid the driver's not hearing of the speaking of the said speaking device 6 or 19 because of listening to the music in the car, this bump avoid system will also make the relay (or an object with on-or-off function) function while the said speaking device 6 or 19 is speaking, and this function is able to off electricity necessary for the said music (or radio) to function.

8. In order to make the driver have time to press once the said button switch to indicate that he/she is being attentive and not feel nervous, while the said speaking device 19 is supplied with electricity, time circuit 21 is simultaneously supplied with electricity to function; this function will temporarily supply the said relay 18 with necessary electricity to make it function for a period; this function for a period will off electricity necessary for the said relay (or transistor or the said object ) 2 to funciton.

9. In order to make it unnecessary to brake automatically or to alarm or to down speed while the driver will step off from the accelerator pedal or will step the brake pedal, a switch (or an object with on-or-off function) will start to function while the driver stepping off from the accelerator pedal or stepping the brake pedal; this function will supply relay (or an object with on-or-off function ) with electricity necessary for its function to make it function; this function will off electricity necessary for the brake machine or the said alarm signal 37 or the said speed-downing to function.

10. In order not to brake automatically or to down speed while the driver is overtaking, while operating the operation bar of indicator light, a switch (or an object with on-or-off function) will start to function; this function is able to off electricity necessary for the said brake machine or the said speed-downing to function; or use the electricity that makes the indicator lights function to make time circuit function; this function makes a relay (or an object with on-or-off funciton) funciton; this function is able to off electricity necessary for the said brake machine or speed-downing to function.

11. In order to be able not to make noise to the driver and also to be able to make it more possible for the driver to pay attention to driving safety all the time and show the bump avoid system that he/she is being attentive by pressing once the said button switch, so especially make the words spoken by the said speaking device to be showed periodically on a screen (that will indicate words periodically or other object that will indicate words periodically) to remind the driver.

12. In order to make the following driver on the alert, while the said speaking device (or the said alarm device ) 19 or the said induction apparatus functioning, also supply the said alert device 60 with electricity necessary for its function to make it function so as to warn the following driver to make him/her on the alert.

13. In order to make the following car also brake automatically (or automatically warn) while this car braking automatically, set a transmitter " transmitting backwards some certain frequency to the following car to make its receiver receive" on the hind part of the car or other suitable place. The electricity necessary for this transmitter to function is supplied by the electricity that makes the brake light light, (or the electricity produced by the function of the said object, which is made by means of stepping the brake pedal or stepping off from the accelerator pedal).

14. In order to make the following driver aware in advance that this car will brake automatically, set a forewarning device on the hind part of this car or other suitable place; this forewarning device is able to forewarn the following driver that " this car will brake automatically " either by using words or by adopting other method that is able to indicate that this car will brake automatically.

15. In order to make it very convenient for the driver to operate, the button switch (or an object with on-or-off function) 12 is set on the side of the inside circumference or other suitable place of the steering wheel.

16. For the convenience of setting the said bump avoid system on or in the car, except the said alert device, the said forewarning device, the said transmitter, and the said screen of the said bump avoid system, all the component parts and circuits that can be concentratively assembled on a circuit sheet (P.C.B.) are done as such;also the said circuit sheet is set inside a box, and only the electric wires required to be stretched outwards are done as such.

17. In order that, while the driver of the front car steps off from the accelerator pedal or the front car brakes automatically (or the driver steps the brake pedal) to make the said transmitter 69 transmit, the driver of this car wants to be made aware of it by means of downing speed or warning instead of braking automatically, add a receiver that "receives specially the frequency transmitted by the said transmitter' and specially supplies the said speed-downing or warning with electricity necessary for its function to make it function.

18. If the electricity 4A necessary for the said delay time circuit or the said time circuit 4 to function is not supplied by the said induction distance regulator 3, it will then be supplied by " the electricity produced by an object that reacts to the speed of the car, "or by" the electricity controlled by the stopping or moving of the car, " or by " the said power-control device.

19. The electricity necessary for the said forewarning device 65A and the said screen 79 to funciton is connected here from the said 4A.

FIG.1

EP 0 347 242 A2